# EUROPÄISCHE PATENTSCHRIFT

(11) **EP 0 188 197 B1**
(45) Veröffentlichungstag und Bekanntmachung des Hinweises auf die Patenterteilung: **17.04.1996**
(21) Anmeldenummer: 86100071.9
(22) Anmeldetag: 04.01.1986
(51) Int. Cl.: C08J 5/18, G11B 5/704

(54) **Orientierte Kunststoffolie**
Oriented plastic film
Feuille orientée en matière plastique

(30) Priorität: 15.01.1985 DE 3501017
(43) Veröffentlichungstag der Anmeldung: 23.07.1986
(73) Patentinhaber: HOECHST AKTIENGESELLSCHAFT, D-65926 Frankfurt am Main (DE)
(72) Erfinder: Dallmann, Hermann, Dr., D-6200 Wiesbaden (DE); Seifried, Walter, Dr., D-6200 Wiesbaden (DE); Schäfer, Werner, Dr., D-6238 Hofheim-Diedenbergen (DE); Janocha, Siegfried, Dr., D-6200 Wiesbaden (DE); Hensel, Hartmut, Dr., D-6229 Schlangenbad 3 (DE)

(56) Entgegenhaltungen:
- EP-A- 0 188 198
- DE-A- 3 140 851
- DE-A- 3 313 923
- US-A- 4 233 352
- US-A- 4 320 207

## Beschreibung

Die vorliegende Erfindung bezieht sich auf eine biaxial oder multiaxial gestreckte, hitzefixierte Folie aus thermoplastischem Kunststoff, die auf ihrer Oberfläche zahlreiche Unebenheiten aufweist, welche aus feinen Vorsprüngen und jeweils um diese herum ausgebildeten Vertiefungen bestehen.

Biaxial oder multiaxial orientierte Folien aus thermoplastischem Polyester, vorzugsweise Polyethylenterephthalat, werden wegen ihrer überlegenen Eigenschaften wie ihrer Zugfestigkeit, ihrer Reißfestigkeit, ihres Elastizitätsmoduls, ihrer Transparenz, ihrer chemischen und thermischen Beständigkeit u.a. auf verschiedenen technischen Gebieten wie dem reprografischen Sektor als Dielektrikum für Kondensatoren, als Trägerfolien für magnetische Aufzeichnungsmedien wie z.B. für Video-, Audio- und Computerbänder, für Magnetkarten sowie Floppy Disks und dergleichen eingesetzt.

Die Polyesterfolien müssen für die verschiedenen Einsatzgebiete spezifische Anforderungen erfüllen, die über die Rohstoffrezeptur oder die Verfahrensparameter während der Folienherstellung eingestellt werden können.

Eine der Voraussetzungen für eine einwandfreie Handhabung der Folien während der Produktion, der Verarbeitung und der Anwendung ist ein niedriger Reibungskoeffizient der Folienoberfläche. Je rauher die Folienoberfläche ist, umso besser ist das Wickelverhalten und damit die Ausbeute in der Produktion.

Um der an sich glatten Folienoberfläche eine gewisse Rauhigkeit zu verleihen, werden normalerweise feine Partikel eingesetzt, die im einfachsten Fall locker auf die Oberfläche aufgetragen werden (Bepuderungsverfahren). Die Partikel können aber auch so in die glatte Oberfläche eingebettet werden, daß mikrofeine, mehr oder weniger unregelmäßige Erhebungen entstehen, wodurch die vorher glatte Oberfläche ein bestimmtes Rauhigkeitsprofil erhält. Das Einbetten von Partikeln in Folien aus thermoplastischem Kunststoff kann nach zwei generellen Methoden erfolgen; entweder es werden dem Polymeren in diesem nicht lösliche, meist anorganische, feinteilige Stoffe zugesetzt, oder es werden im Polymeren gelöste Stoffe, z.B. Rückstände des Umesterungskatalysators, gezielt ausgefällt (Präzipitatbildung). Aus der DE-A- 26 33 358 ist sogar eine Methode bekannt, nach der beide Varianten kombiniert werden können.

Zur Anwendung als Magnetbänder, insbesondere als Videobänder, müssen die Folien aber einerseits eine glatte Oberfläche haben, um ihre elektromagnetischen Umwandlungseigenschaften innerhalb eines bestimmungsgemäß erforderlichen Bereichs einzustellen, und darüber hinaus müssen sie andererseits einen niedrigen Reibungskoeffizienten besitzen, um günstige Laufeigenschaften der Bänder in dem Abspielgerät, hohe Abriebfestigkeit und Dauerhaftigkeit zu gewährleisten. Um diesen sich widersprechenden Eigenschaften gerecht zu werden, beschreibt die DE-A- 31 40 851 eine Folie, die inerte Zusätze oder Katalysatorrückstände enthält, wodurch zahlreiche unebene Einzelteile an der Oberfläche der Folie entstehen, wobei aber jedes dieser Einzelteile aus einem feinen Vorsprung und einer um diesen herum vorliegenden Vertiefung aufgebaut ist.

Die Anwendung anorganischer Pigmente führt während des Streckprozesses leicht zur Ausbildung von Hohlräumen (voids) an den Stellen, an denen die Matrix vom Pigmentkorn abreißt. Bei der weiteren Verarbeitung der Folie, wie z.B. beim Beschichten, d.h. dem Auftragen der Magnetdispersion, können sich dann im oberflächennahen Bereich Teile des Polymerüberzuges ablösen und, infolge des hierdurch bedingten Abriebs, die Qualität der Bänder bei der Beschichtung und damit ihre elektromagnetischen Eigenschaften unkontrolloiert verschlechtern.

Die mehr oder weniger breite Korngrößenverteilung anorganischer Pigmente sowie ihre Neigung zur Bildung von Agglomeraten trotz aufwendiger Aufbereitungsverfahren wirken sich ebenfalls negativ auf die Folienqualität aus.

US-Patent 4,320,207 (Watanabe et al.) beschreibt den Zusatz eines feinen Pulvers von vernetzten Polymeren in Polyesterfolien, um eine Oberfläche mit niedrigem Reibungskoeffizienten zu erhalten. Die vernetzten Polymere werden hergestellt durch Copolymerisation von mindestens einem Monovinyl-Bestandteil in einem organischen Lösungsmittel. Anschließend wird das Polymerisat pulverisiert, um die gewünschte Teilchengrößenverteilung zu erhalten. Die vernetzten Polymere müssen in der Lage sein, eine kovalente Bindung zu den Polyesterfolien herzustellen.

Auch die Bildung innerer Teilchen durch Ausfällung von Rückständen des Umesterungskatalysators (Präzipitatbildung) läßt sich bezüglich der Menge und Größe der ausgefällten Teilchen nicht präzise kontrollieren.

Zur Verbesserung der Haftung der Teilchen zur Matrix und zur Reduzierung des Abriebs ist bereits vorgeschlagen worden (DE-A- 3 313 923), dem Folienrohstoff feinteilige, im wesentlichen homodispers verteilte, vernetzte Polymerteilchen zuzusetzen, die durch ein Emulsionspolymerisationsverfahren hergestellt wurden und die eine enge Korngrößenverteilung aufweisen. Die Teilchen werden, bedingt durch ihren chemischen Aufbau, stärker mit der Folienmatrix verknüpft. Die Folien aus diesen Rohstoffen zeigen aber immer noch ein unbefriedigendes Lauf- und Abriebverhalten.

Die vorliegende Erfindung hat es sich daher zur Aufgabe gemacht, eine Folie herzustellen, die ein gutes Lauf- und Abriebverhalten zeigt und die gleichzeitig bei Einsatz als Trägerfolie für magnetische Aufzeichnungsmedien ausgezeichnete elektromagnetische Umwandlungseigenschaften aufweist.

Gelöst wird diese Aufgabe durch eine biaxial oder multi-axial gestreckte, hitzefixierte Folie aus einem thermoplastischen Polyesterrohstoff, mit 0,005 bis 5,0 Gew.-%, bezogen auf das Gewicht der Folie, an fein verteilten, organischen vernetzten, oder fein verteilten, organischen gehärteten Polymerteilchen, die über reaktive Gruppen in den Polyesterrohstoff eingebunden sind, wobei die Polymerteilchen kugelförmig sind und einen mittleren Durchmesser von 0,01 bis 5,0 µm aufweisen, mit einem Quotient aus dem Gewichtsmittel des Teilchendurchmessers (D_{w}) und dem Zahlenmittel des Teilchendurchmessers (Dₙ) < 1,1, wobei die Folie auf ihrer Oberfläche zahlreiche Unebenheiten von etwa gleicher Größe aufweist, die aus einer Vertiefung um einen Vorsprung herum gebildet sind und die Vorsprünge aus den genannten Polymerteilchen bestehen, und der Mittelrauhwert Rₐ im Bereich von 0,005 bis 0,10 µm liegt. Folie der eingangs genannten Gattung, deren kennzeichnendes Merkmal darin zu sehen ist, daß die Vorsprünge aus vernetzten oder gehärteten organischen Partikeln bestehen.

Die gehärteten Teilchen können beispielsweise aus Melamin-Formaldehyd-Harz, Benzoguanamin-Formaldehyd-Harz oder einem Epoxyharz bestehen.
Die vernetzten organischen Partikel können als Bausteine ungesättigte nichtionische Monomere wie Ester der Acryl- und Methacrylsäure wie Methylmethacrylat und Butylacrylat, die Ester von ungesättigten Dicarbonsäuren wie Maleinsäuredialkylester, ungesättigte Vinylverbindungen wie Styrol, ungesättigte Nitrile wie Acrylnitril, funktionelle Monomere wie ungesättigte Carbonsäuren, hydroxylhaltige Monomere wie Hydroxyethylmethacrylat, epoxidgruppenhaltige Monomere wie Glycidylmethacrylat, ungesättigte Sulfonsäuren u.a. enthalten.
Beispiele für vernetzende Komponenten sind Diallylphthalat, Divinylbenzol u.a.
Komponenten, die funktionelle Gruppen tragen und zu diesem Zweck in die Teilchen einpolymerisiert werden, daß sie bevorzugt in der Polyestersynthese Kovalente Bindungen zwischen Polyestermatrix und vernetzten Teilchen ausbilden können, sind Hydroxyethylmethacrylat, Acrylsäure und Methacrylsäure.
Der Härtungs- und Vernetzungsgrad der Teilchen kann durch die Zusammensetzung, insbesondere der härtenden und vernetzenden Komponente, in weiten Grenzen variiert, d.h. den Anforderungen angepaßt werden.
Wesentlich ist, daß die gehärteten oder vernetzten Teilchen während der Polymersynthese nicht löslich und nicht schmelzbar sind und auch beim Aufschmelzen des Polymeren, insbesondere bei der Herstellung von Formkörpern wie Folien oder der Regenerierung von Abfällen erhalten bleiben.

Die Teilchen können mittels der bekannten Verfahren sowohl durch Emulsions- als auch durch Suspensionspolymerisation hergestellt werden. In die Polymermatrix können sie bei der Polymerherstellung in Form von wäßrigen oder glykolischen Dispersionen oder über ein Konzentrat eingearbeitet werden. Die Einarbeitung während der Polymersynthese führt zu einer besonders guten Einbindung in die Matrix sowie zu einer guten Verteilung in dem Polymeren selbst.

Die Folie enthält die vorstehend beschriebenen Teilchen in einer Menge von 0,005 bis 5 Gew.-%, bevorzugt von 0,02 bis 1 Gew.-%, bezogen auf das Gewicht der Folie. Es können entweder nur Partikel einheitlicher Größe oder Mischungen von Partikeln unterschiedlicher Größe eingesetzt werden.

Die Polymerteilchen besitzen im wesentlichen kugelige Form. Die Teilchen weisen mittlere Durchmesser im Bereich von 0,01 bis 5,0 µm, bevorzugt von 0,02 bis 3 µm, auf. Insbesondere beträgt der Quotient aus dem Gewichtsmittel des Teilchendurchmessers (D_{w}) und dem Zahlenmittel des Teilchendurchmessers (Dₙ) bevorzugt < 1,1. Zur Bestimmung von D_{w} und Dₙ siehe U.E. Woods, J.S. Dodge, I.M. Krieger, P. Pierce, Journal of Paint Technology, Vol. 40, No. 527, Seite 545 (1968).

Die Folie wird aus einem thermoplastischen Polyester hergestellt.
Unter Polyesterrohstoffen sind Polyester-Homo- und -Copolymere, Gemische verschiedener Polyester sowie Abmischungen und Blends von Polyestern mit anderen Polymeren zu verstehen.
Die Herstellung der Polyester kann sowohl nach dem Umesterungsverfahren mit den bekannten Katalysatoren wie z.B. Zn-, Ca-, Mn-, Mg-, Li-, Ge-Salzen oder nach dem Direktveresterungsverfahren erfolgen. Beispiele für Polyester sind Polyethylenterephthalat, Polytetramethylenterephthalat, Poly-1,4-cyclohexylendimethyl-terephthalat, Polyethylen-2,6-Naphthalat.

Die Copolyester können als Bausteine Adipinsäure, Sebacinsäure, Phthalsäure, Isophthalsäure, Sulfoisophthalsäure u.a. enthalten. Die nach dem Umesterungsverfahren hergestellten Polyester können sogenannte interne Partikel, Katalysatorrückstandsteilchen enthalten.
Beispiele für Polymere, die in den Polyester eingearbeitet werden können, sind Polyolefin-Homo- oder -Copolymere wie Polypropylen, Poly-4-methylpenten, Ethylen-Vinylacetat-Copolymere, die ihrerseits verseift sein können, Ionomere, Polyamide, Polycarbonate, fluorhaltige Polymere.

Weiterhin kann die Folie anorganische oder organische Additive enthalten, die sich auf ihre Eigenschaften wie z.B. die Haft- und Gleitreibung und die Abriebfestigkeit sowie das Laufverhalten positiv auswirken. Beispiele für derartige Additive sind Pigmente wie CaCO₃, SiO₂, TiO₂, Kaolin u.a., Fettsäureester, Polysiloxane, Nukleierungsmittel wie Alkali- oder Erdalkalisalze von Esterwachsen bzw. teilverseiften Produkten derselben, Benzoaten und Stearaten.

Die Polymeren und Additive können nach an sich bekannten Verfahren, die nicht näher beschrieben werden müssen, über ein Konzentrat eingearbeitet werden. Alternativ hierzu können sie während der Herstellung des Polyesters zudosiert werden.
Ein entscheidender Nachteil der Verfahren zur Erzeugung der Oberflächenstrukturen nach dem Stand der Technik ist, daß bei der Art der Einstellung der Korngröße der Partikel eine gewisse Korngrößenverteilung mit den Problemen von Überkorn und Agglomeratbildung unvermeidlich ist.

Der wesentliche Vorteil im Vergleich zu den bekannten Folien und Verfahren besteht darin, daß von einem Rohstoff ausgegangen wird, der feinverteilte vernetzte oder gehärtete Polymerteilchen enthält, die eine enge Korngrößenverteilung besitzen, eine gute Affinität zum Rohstoff aufweisen und über reaktive Gruppen in diesen quasi eingebunden werden können.

Die Ausbildung von Hohlräumen während des Streckens in der ersten axialen Richtung wird hierdurch nahezu ausgeschlossen, die Erzeugung der Strukturen somit wesentlich erleichtert.
Mit den kovalent eingebauten Polymerteilchen ist es möglich, über die Wahl der Korngröße, der Konzentration, der Aufheiz- und Streckbedingungen und dergleichen die Größe, d.h. den Längs durchmesser der Vertiefungen, sowie ihre Häufigkeit gezielt einzustellen.

Die Oberflächenrauhigkeit der Folie kann durch die Häufigkeit und Größe der Unebenheiten sowie die Höhe der Erhebungen in der Mitte der Vertiefungen, die ihrerseits von der Partikelgröße, der Partikelhäufigkeit und den Verfahrensparametern bestimmt werden, im Vergleich zu dem Stand der Technik mittels der gehärteten oder vernetzten Teilchen gezielter eingestellt werden.

Die durchschnittliche Oberflächenrauhigkeit liegt im Bereich eines Mittenrauhwerts Rₐ (DIN 4762) von 0,005 bis 0,10 µm, bevorzugt von 0,005 bis 0,06 µm, bei einem Cut Off von 0,25 mm.

Die Oberflächeneigenschaften und Oberflächenrauhigkeiten können über zusätzliche Beschichtung der Folien mit Lösungen oder Dispersionen, die u.a. vernetzbare, härtbare, gehärtete oder vernetzte Substanzen enthalten können, beeinflußt werden. Beispiele hierfür sind Copolyester, Polyurethane, Acrylsäureabkömmlinge, Polysiloxane, Styrol-Butadien-Kautschuke oder bereits vernetzte oder gehärtete Substanzen, die z.B, in Form von Einzelpartikeln in den Lösungen oder Dispersionen vorliegen. Die Beschichtungen können in line, d.h. zwischen den Streckstufen, oder off line, d.h. nachdem die Folie fertig hergestellt wurde, aufgetragen werden.

Die erfindungsgemäße Folie wird nach dem Extrusionsverfahren hergestellt, wobei ein thermoplastischer Polyester, der gehärtete oder vernetzte organische Partikel der im vorstehenden beschriebenen Art enthält, aus einer Schlitzdüse auf eine Kühlwalze, die eine Oberflächentemperatur im Bereich von T = 20 bis 60°C aufweisen kann, extrudiert wird. Dieser Film wird einer definierten Aufheizung, z.B. mittels IR-Strahler, unterworfen und anschließend sowohl in Längs- als auch Querrichtung bei Temperaturen zwischen dem Glaspunkt des Polyesters und 160°C sowie einem Streckverhältnis von vorzugsweise 2,0 bis 6 verstreckt wird, wobei zwischen den einzelnen Streckstufen eventuell zusätzlich beschichtet wird und anschließend bei Temperaturen zwischen 150 und 240°C hitzefixiert wird. Die Anzahl und die Reihenfolge der Längs- und Querstreckstufen ist nicht test vorgegeben. Auch können die einzelnen Streckvorgänge "längs" und "quer" ein- oder mehrstufig durchgeführt werden. Ebenso sind Simultanstreckverfahren (gleichzeitige Längs- und Querstreckung) möglich.

Die Folien mit den Oberflächenstrukturen können demnach in beiden Richtungen ausgeglichene Eigenschaften (balanced Typen) oder in einer Richtung höhere Festigkeiten aufweisen.

Die F-5-Werte liegen somit im Bereich von 50 bis 300 N/mm, vorzugsweise von 90 bis 250 N/mm.
Mit dem hier benutzten Ausdruck "F-5-Wert" ist eine einer Dehnung von 5% entsprechende Zugspannung gemeint.

Die Folien können zwischen den einzelnen Streckstuten oder vor der Fixierung einer Kalandrierung bei Temperaturen oberhalb des Glaspunktes des Polyesters und bei einem Walzendruck im Bereich von 1.000 bis 10.000 N/cm unterzogen werden.

Vor der ersten Streckung oder zwischen den Streckstufen können die Folien kurzzeitig bei Raumtemperatur oder Temperaturen bis 50°C mit einem organischen Lösungsmittel wie Methanol, Ethanol u.a. behandelt werden.

Die mittels der gehärteten oder vernetzten Teilchen hergestellten Folien können die Vorsprünge und Vertietungen sowohl auf einer als auch auf beiden Oberflächen aufweisen.

Eine Folie mit den Vorsprüngen und Vertietungen auf nur einer Oberfläche kann beispielsweise durch einseitige Aufheizung der Folie vor oder zwischen den Streckstufen oder durch Coextrusion hergestellt werden. Bei der Coextrusion wird eine mehrschichtige Folie erhalten, die nur eine oberflächennahe Schicht mit den vernetzten oder gehärteten Teilchen enthält. Dieses Verfahren bietet außerdem die Möglichkeit, verschiedene Thermoplaste einzusetzen. Hierdurch besteht u.a. die Möglichkeit, die Haftung zu nachfolgend aufgebrachten Schichten durch gezielte Auswahl der Copolymeren zu verbessern. Beispiele für derartige Copolymere sind Copolyester, ein mit Sulfoisophthalsäure-Natriumsalz modifizierter Polyester, phospholanhaltiger Polyester u.a.

Die erfindungsgemäßen Folien können sowohl auf dem technischen Sektor, z.B. als Magnetbandträgerfolien, für reprografische, fotografische Zwecke u.a., als auch auf dem Verpackungssektor verwendet werden

Die Erfindung wird durch nachfolgende Beispiele beschrieben.
Eingesetzt wird hierbei ein Rohstoff, der fein verteilte, vernetzte Polymerteilchen auf Acrylatbasis enthält, die eine enge Korngrößenverteilung aufweisen und durch Emulsionspolymerisation hergestellt wurden. Sie wurden während der Herstellung des Polyesters über Dispersionen in den Rohstoff eingearbeitet.

Das Abriebverhalten der Folien wurde an einem Meßgerät ermittelt, bei dem ein 12,5 mm breites Folienband mit einer konstanten Bahnspannung (1N) zunächst über eine Reinigungswalze aus speziellem Gummi zwecks Entfernung des aufliegenden Schmutzes, dann über einen feststehenden Umlenkstift aus einer Kassette gezogen, anschließend über zwei als Meßrollen dienende Gummirollen geführt und dann aufgerollt wurde. Die Beladung der Gummirollen mit abgeriebenem Material wurde nach einer Meßskala von 1 bis 5 von sehr gut bis mangelhaft beurteilt.

### Beispiel 1

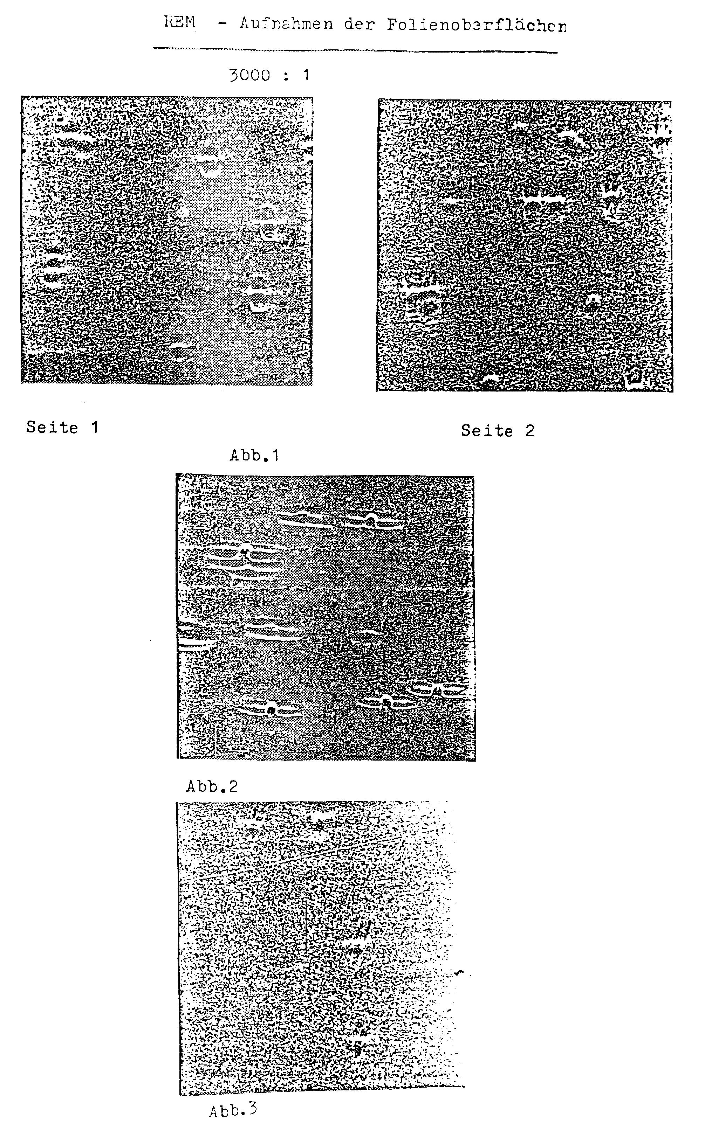

Polyethylenterephthalat, das 1000 ppm eines vernetzten organischen Pigments aus Methylmethacrylat, Butylacrylat und Hydroxymethylacrylat mit einem mittleren Teilchendurchmesser von 0,6 µm enthielt, wurde bei 280°C geschmolzen, zu einer Folie mittels einer T-Düse geformt und auf eine Gießtrommel, die eine Temperatur von ca. 40°C hatte, aufgelegt. Die abgekühlte Vorfolie wurde mit ca. 10 m/min an einem IR-Strahler vorbeigeführt und anschließend stufenweise biaxial gestreckt, wobei die Strecktemperatur in Maschinenrichtung 95°C und in Querrichtung ca. 110°C betrug. Das Flächenstreckverhältnis λ war 3,6 x 3,4. Die Folie wurde dann bei 195°C im Spannrahmen thermofixiert. Die erhaltene Folie mit einer Gesamtdicke von 12 µm war vom balanced Typ und wies auf beiden Oberflächen Strukturen auf, die aus Vertiefungen um Vorsprünge herum bestehen. Derartige Strukturen sind in Abb. 1 dargestellt.

Beispiel 2 Eine Folie aus dem in Beispiel 1 beschriebenen Rohstoft wurde bei einer Geschwindigkeit von 15 m/min an einem IR-Strahlersystem vorbeigeführt.
Sie wurde dann bei 95°C und einem Streckverhältnis von λ = 3,4 in Maschinenrichtung gestreckt. Die uniaxial orientierte Folie wurde an einem Streckrahmen nach einer Vorheizzeit von 15 s bei einer Strecktemperatur von 110°C um das 2,5fache in Querrichtung gestreckt und in einem Fixierrahmen bei 198°C thermofixiert.
Die Folie hatte auf beiden Oberflächen Strukturen von länglichen Vertiefungen um Vorsprünge herum. Derartige Strukturen sind in Abb. 2 dargestellt. Das Abriebverhalten der Folie war gut.

### Beispiel 3

Ein Polyethylenterephthalatrohstoff, der 500 ppm vernetzte organische Partikel der Zusammensetzung wie in Beispiel 1 und 0,4 Gew.-% (bezogen auf das Gewicht des Polymeren) Natriummontanat enthielt, wurde aufgeschmolzen, in einer Breitschlitzdüse zu einer Folie geformt und auf eine hochglanzpolierte Walze aufextrudiert. Die so erhaltene Folie wurde vor der ersten Streckstufe auf 80°C aufgeheizt und anschließend biaxial gestreckt, wobei ein Flächenstreckverhältnis von λ = 13 erzielt wurde. Die biaxial orientierte Folie wurde bei 195°C thermofixiert. Die Folie wies auf beiden Oberflächen Vertiefungen um die Polymerpartikel auf. Solche Strukturen sind beispielsweise in Abb. 3 gezeigt. Ihr Abriebverhalten, das wie vorstehend beschrieben geprüft wurde, war sehr gut.

### Beispiel 4

Ein völlig pigmentfreier und ein 1000 ppm eines vernetzten organischen Pigments enthaltender Polyesterrohstofr wurden in separaten Extrudern aufgeschmolzen und nach dem Passieren eines Adapters und eines sich daran anschliessenden Extrusionsdüsensystems auf eine Kühlwalze extrudiert.
Die erhaltene Folie wurde mit einer Geschwindigkeit von ca. 10 m/min an einem Infrarotstrahlersystem vorbeigeführt, wobei die pigmentierte Schicht dem Strahlersystem zugewendet war. Die Folie wurde anschließend stufenweise biaxial gestreckt und bei 195°C thermofixiert. Die 14,5 µm dicke biaxial orientierte Folie wies ein 1 µm dicke Schicht aus dem pigmentierten Rohstoff auf. Die Oberfläche dieser Schicht zeigte Strukturen, wie sie bereits in den vorstehenden Beispielen beschrieben sind. Die Rauhigkeitswerte der beiden Folienoberflächen betrugen auf der glatten Seite 0,005 µm und auf der rauhen Seite mit Oberflächenstrukturen 0,015 µm, ausgedrückt in Rₐ nach DIN 4762. Der Reibungskoeffizient (nach DIN 53375 gemessen) der rauhen Seite betrug 0,35.

## Patentansprüche

1. Biaxial oder multi-axial gestreckte, hitzefixierte Folie aus einem thermoplastischen Polyesterrohstoff, mit 0,005 bis 5,0 Gew.-%, bezogen auf das Gewicht der Folie, an fein verteilten, organischen vernetzten, oder fein verteilten, organischen gehärteten Polymerteilchen, die über reaktive Gruppen in den Polyesterrohstoff eingebunden sind, wobei die Polymerteilchen kugelförmig sind und einen mittleren Durchmesser von 0,01 bis 5,0 µm aufweisen, mit einem Quotient aus dem Gewichtsmittel des Teilchendurchmessers (D_{w}) und dem Zahlenmittel des Teilchendurchmessers (Dₙ) < 1,1, wobei die Folie auf ihrer Oberfläche zahlreiche Unebenheiten von etwa gleicher Größe aufweist, die aus einer Vertiefung um einen Vorsprung herum gebildet sind und die Vorsprünge aus den genannten Polymerteilchen bestehen, und der Mittelrauhwert Rₐ im Bereich von 0,005 bis 0,10 µm liegt.

2. Folie nach Anspruch 1, dadurch gekennzeichnet, daß sie aus einem Polyester, insbesondere aus Polyethylenterephthalat, besteht.

3. Folie nach Anspruch 1, dadurch gekennzeichnet, daß sie aus einem Gemisch verschiedener Polyester besteht.

4. Folie nach Anspruch 1, dadurch gekennzeichnet, daß sie wenigstens ein weiteres Polymeres enthält.

5. Folie nach Anspruch 1, dadurch gekennzeichnet, daß sie die Gleiteigenschaften und die Abriebfestigkeit verbessernde anorganische oder organische Additive enthält, bevorzugt Pigmente wie CaCO₃, SiO₂, TiO₂, Kaolin, Fettsäureester, Polysiloxane oder Nukleierungsmittel wie Alkali- oder Erdalkalisalze von Esterwachsen bzw. teilverseiften Esterwachsen, von Benzoaten oder Stearaten.

6. Folie nach Anspruch 1, dadurch gekennzeichnet, daß die aus Vertiefungen um eine Erhebung bestehenden Unebenheiten sich nur auf einer Oberfläche befinden.

7. Folie nach Anspruch 6, dadurch gekennzeichnet, daß sie aus mehreren Schichten besteht.

8. Folie nach Anspruch 7, dadurch gekennzeichnet, daß die einzelnen Schichten eine unterschiedliche chemische Zusammensetzung aufweisen.

9. Folie nach Anspruch 7, dadurch gekennzeichnet, daß die Schichten gleichzeitig extrudiert werden.

10. Folie nach Anspruch 1, dadurch gekennzeichnet, daß die Folie ein- oder beidseitig mit einer Lösung oder Dispersion beschichtet wird, wobei in der Lösung oder Dispersion vernetzbare oder vernetzte Bestandteile enthalten sind.

11. Verfahren zur Herstellung einer Folie nach Anspruch 1, dadurch gekennzeichnet, daß eine unverstreckte Folie auf eine Temperatur zwischen Glaspunkt des Polyesters und 160 °C erhitzt und biaxial oder multiaxial verstreckt wird, wobei zwischen den einzelnen Streckstufen eventuell zusätzlich beschichtet wird, wonach im Bereich von 150 bis 240 °C hitzefixiert wird.

12. Verwendung einer Folie nach Anspruch 1, hergestellt nach dem Verfahren von Anspruch 11, als Trägerfolie für magnetisches Aufzeichnungsmaterial oder für reprografische Zwecke.

13. Folie nach Anspruch 1, dadurch gekennzeichnet, daß die organischen vernetzten Polymerteilchen als Bausteine ungesättigte nichtionische Monomere wie Ester der Acryl-und Methacrylsäure, beispielsweise Methylmethyacrylat, und Butylacrylate; Ester von ungesättigten Dicarbonsäuren wie Maleinsäuredialkylester; ungesättigte Vinylverbindungen wie Styrol; ungesättigte Nitrile wie Acrylonitril; funktionelle Monomere wie ungesättigte Carbonsäure; hydroxylhaltige Monomere wie Hydroxyethylmethacrylat; epoxidgruppenhaltige Monomere wie Glycidylmethacrylat oder ungesättigte Sulfonsäure enthalten.

14. Folie nach Anspruch 1, dadurch gekennzeichnet, daß die gehärteten organischen Polymerteilchen Melamin-Formaldehydharz, Benzoguanamin-Formaldehydharz oder ein Epoxyharz enthalten.

## Claims

1. A biaxially or multiaxially oriented, heat-set film comprising a thermoplastic polyester base material, with from 0.005 to 5.0% by weight, based on the weight of the film, of finely divided organic crosslinked, or finely divided organic hardened, polymer particles, which are bonded into the polyester base material via reactive groups, the polymer particles being spherical and having a mean diameter of from 0.01 to 5.0 µm, with a quotient of the weight average of the particle diameter (D_{w}) and the numerical average of the particle diameter (Dₙ) of < 1.1, the film having on its surface numerous unevennesses of approximately equal size which are formed from an indentation around a protrusion, and the protrusions consisting of the abovementioned polymer particles, and the mean roughness value Rₐ being in the range from 0.005 to 0.10 µm.

2. The film as claimed in claim 1, which comprises a polyester, especially polyethylene terephthalate.

3. The film as claimed in claim 1, which comprises a mixture of different polyesters.

4. The film as claimed in claim 1, which comprises at least one further polymer.

5. The film as claimed in claim 1, which comprises inorganic or organic additives which improve the frictional properties and the abrasion resistance, preferably pigments such as CaCO₃, SiO₂, TiO₂, kaolin, fatty acid esters, polysiloxanes or nucleating agents, such as alkali metal or alkaline-earth metal salts of ester waxes or partially saponified ester waxes, of benzoates or stearates.

6. The film as claimed in claim 1, wherein the unevennesses consisting of indentations around a protrusion are located only on one surface.

7. The film as claimed in claim 6, which comprises a plurality of layers.

8. The film as claimed in claim 7, wherein the individual layers are of different chemical composition.

9. The film as claimed in claim 7, wherein the layers are extruded simultaneously.

10. The film as claimed in claim 1, wherein the film is coated on one or both sides with a solution or dispersion which comprises crosslinkable or crosslinked constituents.

11. A process for the preparation of a film as claimed in claim 1, which comprises heating an unoriented film to a temperature between the glass transition point of the polyester and 160°C and subjecting it to biaxial or multiaxial orientation, carrying out additional coating if desired between the individual orientation stages, and then heat-setting the film in the range from 150 to 240°C.

12. The use of a film as claimed in claim 1, prepared by the process of claim 11, as a carrier film for magnetic recording material or for reprographic purposes.

13. The film as claimed in claim 1, wherein the organic crosslinked polymer particles comprise as structural units unsaturated nonionic monomers such as esters of acrylic and methacrylic acid, for example methyl methyacrylate, and butyl acrylates; esters of unsaturated dicarboxylic acids, such as dialkyl maleates; unsaturated vinyl compounds such as styrene; unsaturated nitriles such as acrylonitrile; functional monomers such as unsaturated carboxylic acid; hydroxyl-containing monomers such as hydroxyethyl methacrylate; monomers which contain epoxide groups, such as glycidyl methacrylate, or unsaturated sulfonic acid.

14. The film as claimed in claim 1, wherein the hardened organic polymer particles comprise melamineformaldehyde resin, benzoguanamine-formaldehyde resin or an epoxy resin.

## Revendications

1. Feuille étirée de façon bi-axiale ou multi-axiale, fixée à chaud, à base d'une matière première de polyester thermoplastique, comprenant de 0,005 à 5,0 % en poids, par rapport au poids de la feuille, de particules de polymère organique réticulé finement divisé, ou durci et finement divisé, qui sont liées à la matière première de polyester par l'intermédiaire de groupes réactifs, ces particules de polymère étant en forme de bille et présentant un diamètre moyen de 0,01 à 5,0 µm, le quotient de la moyenne en poids du diamètre de particule (Dₚ) à la moyenne en nombre du diamètre de particule (Dₙ) étant inférieur à 1,1, la feuille présentant à sa surface de nombreuses aspérités environ de même taille, qui sont formées d'une zone en creux s'étendant tout autour d'une partie en saillie, les parties en saillie étant constituées desdites particules de polymère, et la valeur moyenne de la rugosité Rₐ se trouvant dans la gamme de 0,005 à 0,10 µm.

2. Feuille selon la revendication 1, caractérisée en ce qu'elle est constituée d'un polyester, en particulier de polytéréphtalate d'éthylène.

3. Feuille selon la revendication 1, caractérisée en ce qu'elle est constituée d'un mélange de différents polyesters.

4. Feuille selon la revendication 1, caractérisée en ce qu'elle contient au moins un polymère supplémentaire.

5. Feuille selon la revendication 1, caractérisée en ce qu'elle contient des additifs organiques ou minéraux améliorant les propriétés de glissement et de résistance à l'abrasion, en particulier des pigments tels que CaCO₃, SiO₂, TiO₂, du kaolin, un ester d'acide gras, un polysiloxane ou un agent de nucléation tel que des sels alcalins ou alcalino-terreux de cires de type ester ou de cires de type ester partiellement saponifiées, ou de benzoates ou de stéarates.

6. Feuille selon la revendication 1, caractérisée en ce que les aspérités constituées d'une zone en creux s'étendant tout autour d'une partie en saillie ne se trouvent que sur une des surfaces.

7. Feuille selon la revendication 6, caractérisée en ce qu'elle est constituée de plusieurs couches.

8. Feuille selon la revendication 7, caractérisée en ce que les couches individuelles présentent une composition chimique différente.

9. Feuille selon la revendication 7, caractérisée en ce que les couches sont extrudées simultanément.

10. Feuille selon la revendication 1, caractérisée en ce que la feuille est enduite sur une ou deux de ses faces avec une solution ou une dispersion, qui contient des composants réticulables ou réticulés.

11. Procédé de fabrication d'une feuille selon la revendication 1, caractérisé en ce qu'une feuille non étirée est chauffée à une température entre le point de transition vitreuse du polyester et 160°C et est étirée de façon bi-axiale ou multi-axiale, la feuille étant en outre éventuellement enduite entre les étapes d'étirage, après quoi elle est fixée à chaud à une température dans la zone de 150 à 240°C.

12. Utilisation d'une feuille selon la revendication 1, fabriquée suivant le procédé de la revendication 11, en tant que feuille de support pour un matériau d'enregistrement magnétique ou pour des fins reprographiques.

13. Feuille selon la revendication 1, caractérisée en ce que les particules de polymère organique réticulé contiennent en tant qu'élément constitutif des monomères non-ioniques insaturés tels que des esters de l'acide acrylique et méthacrylique, par exemple du méthacrylate de méthyle ou de l'acrylate de butyle ; des esters d'acides dicarboxyliques insaturés tels que des esters dialkyliques d'acide maléique ; des composés vinyliques insaturés tels que le styrène ; des nitriles insaturés tels que l'acrylonitrile ; des monomères fonctionnels tels qu'un acide carboxylique insaturé ; des monomères contenant des groupes hydroxy tels que le méthacrylate d'hydroxyéthyle ; des monomères comprenant des groupes époxyde tels que le méthacrylate de glycidyle ou un acide sulfonique insaturé.

14. Feuille selon la revendication 1, caractérisée en ce que les particules de polymère organique durci comprennent une résine mélamine-formaldéhyde, benzoguanamine-formaldéhyde ou époxy.
